# FASCICULE DE BREVET EUROPEEN

(11) **EP 0 298 823 B1**
(45) Date de publication et mention de la délivrance du brevet: **26.05.1993**
(21) Numéro de dépôt: 88401598.3
(22) Date de dépôt: 24.06.1988
(51) Int. Cl.: C22C 5/04, C03B 5/16, C03B 37/095

(54) **Procédé et utilisation dans l'industrie verrière, notamment pour la protection de pièces contre la corrosion par le verre fondu d'alliages à base de palladium contenant au moins un élément d'addition.**
Verfahren und Anwendung in der Glasindustrie, insbesondere für Schutzwerkstoffe gegen die Korrosion durch geschmolzenes Glas von Legierungen auf Palladiumbasis mit mindestens einem Legierungselement.
Process and use in the glass industry, in particular for protection against corrosion by molten glass of palladium-based alloys containing at least one alloying element.

(30) Priorité: 26.06.1987 FR 8709082
(43) Date de publication de la demande: 11.01.1989
(73) Titulaire: COMPTOIR LYON-ALEMAND - LOUYOT, F-75139 Paris Cédex 03 (FR)
(72) Inventeur: Guerlet, Jean-Paul, F-75011 Paris (FR); Weber, Dan, F-95590 Presles (FR)
(74) Mandataire: Portal, Gérard

(56) Documents cités:
- EP-A- 0 289 097
- DE-B- 1 022 385
- DE-C- 585 545
- US-A- 2 132 116

## Description

La présente invention concerne essentiellement un procédé pour la protection contre la corrosion de pièces utilisées dans l'industrie verrière susceptibles d'être en contact avec le verre fondu et les pièces ainsi obtenues.

L'industrie verrière est, depuis son origine, confrontée au problème de la tenue en corrosion des éléments en contact avec le verre fondu. En effet, les parties métalliques des installations industrielles travaillent à l'air et à des températures variables suivant le type de verre mais généralement comprises entre 1100°C et 1400°C. Or il n'existe que très peu de métaux capables de résister à un environnement aussi sévère, en présentant à la fois une bonne résistance à l'oxydation, une bonne résistance à la corrosion par le verre fondu et des caractéristiques mécaniques suffisantes à ces températures.

Ces contraintes sévères expliquent l'utilisation quasi-systématique d'alliages de platine dans tous les cas où la résistance à la corrosion est le facteur primordial. Les filières de fibrage pour la fabrication de fibres de verre sont l'un des meilleurs exemples dans la mesure où la conjonction des trois facteurs précédemment cités et de stricts critères de qualité pour le produit final conduit à l'utilisation exclusive d'alliages Pt-Rh 10 %, Pt-Rh 20 %.

Cependant, si les qualités des alliages de platine sont reconnues depuis fort longtemps pour les applications verrières, le coût des métaux précieux en a toujours limité l'usage et a toujours été un moteur puissant pour les recherches visant à mettre au point des matériaux de substitution.

C'est ainsi que plusieurs familles d'alliages ont été étudiées, sans que ces études débouchent sur des solutions effectivement utilisables en lieu et place des alliages de platine rhodium.

Les aciers inoxydables ne présentant pas des caractéristiques suffisantes, les études ont été orientées vers l'utilisation de superalliages à base nickel-chrome, du même type que ceux développés pour l'aéronautique. Les caractéristiques mécaniques à chaud, et en particulier la tenue au fluage, obtenues avec ces alliages dans les dernières années sont remarquables.

Elles sont très nettement supérieures à celles des alliages de platine rhodium classiques tout au moins jusqu'à 1200°C et sensiblement meilleures que celles des alliages de platine renforcés par dispersion d'oxydes. Par ailleurs, la résistance à l'oxydation de ces superalliages a été améliorée par l'addition d'éléments très oxydables comme l'aluminium, par exemple. Ces additions ont pour fonction de former une couche superficielle d'oxyde qui protège le métal de base.

Cependant, du fait de discontinuités plus ou moins importantes dans cette couche superficielle, la protection est très imparfaite. La dégradation de la résistance à l'oxydation est d'autant plus marquée que la température augmente et devient incompatible avec une utilisation industrielle au dessus de 1200°C.

En outre, la résistance à la corrosion par les verres fondus de ce type d'alliages reste très insuffisante. En effet, au contact métal-verre, des réactions complexes interviennent entre les oxydes du verre et les oxydes superficiels. Ces réactions entraînent la disparition de la couche protectrice et provoquent une corrosion accélérée du métal de base.

C'est pourquoi, bien que présentant d'excellentes caractéristiques mécaniques, les alliages de ce type ne sont plus utilisables dans l'industrie verrière dès que la température dépasse 1200°C ou que les critères de qualité du verre rendent prohibitive toute corrosion marquée des matériaux métalliques.

Pour tenter de remédier à ces inconvénients majeurs des alliages platine-rhodium et des alliages inoxydables, des recherches ont été effectuées par l'inventeur sur une autre famille d'alliages de substitution : les alliages à base de palladium en raison du fait que, bien qu'il soit un métal précieux appartenant au groupe des platinoïdes, le coût du palladium est nettement plus faible que celui du platine.

Cette recherche d'alliages de substitution à base de palladium allait à l'encontre de l'enseignement de l'homme du métier étant donné que l'utilisation des alliages de palladium était jusqu'à présent impossible dans l'industrie verrière du fait de la corrosion notable de ces alliages au contact des verres fondus.

En effet, les expériences montrent que le palladium pur ou les alliages palladium-platine contenant jusqu'à 50 % de platine présentent au contact d'un verre fondu classique (verre sodocalcique ou verre E) une corrosion intergranulaire marquée. Un gravage superficiel des joints de grains est observable après seulement quelques dizaines d'heures d'essais. Lorsque la durée d'exposition augmente, l'attaque intergranulaire devient de plus en plus importante, ce qui entraîne une fragilisation mécanique inacceptable en utilisation.

Ainsi, la présente invention a pour but de résoudre les inconvénients précités des alliages platine-rhodium ou inoxydables, en proposant l'utilisation d'une famille d'alliages de substitution présentant une résistance à la corrosion par le verre fondu acceptable, qui est de préférence sensiblement équivalente à celle des alliages platine-rhodium 10 %, possèdant ainsi des caractéristiques d'emploi sensiblement identiques à celles des alliages platine-rhodium 10 % généralement utilisés, et dont le coût de fabrication est diminué de façon importante comparativement aux alliages connus.

La présente invention a encore pour but de résoudre le nouveau problème technique consistant en la fourniture d'une famille d'alliages de substitution à base de palladium ayant une résistance à la corrosion par le verre fondu acceptable, de préférence sensiblement équivalente à celle des alliages platine-rhodium 10 %, avec simultanément de bonnes propriétés mécaniques à la température ambiante et à chaud, et notamment une bonne résistance au fluage en particulier à chaud, notamment dans les conditions d'utilisations industrielles de 1100°C-1400°C.

La présente invention permet de résoudre tous ces problèmes techniques pour la première fois d'une manière satisfaisante.

Ainsi, selon un premier aspect, la présente invention concerne un procédé pour la protection contre la corrosion par le verre fondu de pièces utilisées dans l'industrie verrière, caractérisé en ce qu'il consiste à réaliser au moins partiellement lesdites pièces, notamment au niveau des parties susceptibles d'être en contact avec le verre fondu, en un alliage constitué, en poids, de 45 à 98 % de palladium, de 2 à 55 % en poids d'au moins un élément d'addition choisi parmi l'indium, le bismuth, le cuivre et l'argent, et éventuellement d'au moins un élément choisi parmi le platine, le ruthénium, le rhodium, l'iridium, l'étain, le tungstène, l'yttrium et le lanthane ; le total de ces constituants étant de 100 %.

Avantageusement, l'alliage précité comprend de 80 à 95 % en poids de palladium.

Selon un mode de réalisation préféré, cet alliage selon l'invention à base de palladium comprend au moins l'un des éléments suivants en pourcentage en poids :

| | |
|---|---|
| Indium | 2-20 %, de préférence 5-15 % |
| Bismuth | 2-20 %, de préférence 5-15 % |
| Cuivre | 5-20 % |
| Argent | 5-30 % |

Ces alliages présentent une très bonne compatibilité avec les verres sodo-calciques à l'état liquide, les tests de corrosion dans le verre liquide ne montrent aucun signe de dégradation après des temps de séjour compris entre 100 et 500 h.
Selon un mode de réalisation particulièrement avantageux, cet alliage selon l'invention à base de palladium comprend au moins l'un des éléments suivants en pourcentage en poids :

| | |
|---|---|
| Platine | 0-50, de préférence 5 - 40 |
| Ruthénium | 0-20, de préférence 0,5 - 10 |
| Rhodium | 0-20, de préférence 0,5 - 10 |
| Iridium | 0-20, de préférence 0,5 - 10 |
| Etain | 0-20, de préférence 0,5 - 10 |

Par ailleurs, selon une caractéristique particulière de l'invention, lorsque le platine est présent dans l'alliage selon l'invention, il constitue le solde de l'alliage.

Parmi ces alliages, on préfèrera tout particulièrement les alliages ternaires palladium-indium-ruthénium dont les propriétés de résistance au fluage sont remarquables.

En particulier, l'alliage Pd In 5 Ru 5 présente une résistance au fluage pratiquement identique à celle d'un alliage Pt Rh 10 %.

Selon une variante de réalisation particulière, les alliages selon l'invention peuvent être renforcés par la formation d'une phase dispersée par l'emploi de procédés d'élaboration de matériaux à phases dispersées déjà connus qui peuvent être utilisés avantageusement, qu'il s'agisse d'un durcissement structural, d'une métallurgie des poudres, d'une projection à la flamme, etc.

Selon une autre variante de réalisation, les alliages conformes à l'invention peuvent être renforcés par oxydation imterme après addition éventuelle d'un élément tel que tungstène, yttrium, lanthane.

Selon un deuxième aspect, la présente invention concerne l'utilisation de ces alliages dans l'industrie verrière pour la réalisation de pièces en contact avec le verre fondu, qui est de préférence un verre sensiblement exempt d'oxyde moins stable que l'oxyde de l'élément d'addition utilisé, comme l'oxyde de plomb.

L'invention est basée sur la découverte tout à fait surprenante pour l'homme du métier que l'addition d'un élément choisi parmi l'indium, le bismuth, le cuivre et l'argent à des alliages à base de palladium confère à ces alliages une résistance à la corrosion par les verres fondus acceptable.

Certains des alliages utilisés dans le cadre de la présente invention sont connus dans l'état de la technique, mais n'ont jamais été préconisés pour protéger des pièces contre la corrosion par le verre fondu.

Ainsi, le document DE-1 022 385 décrit un alliage constitué de 90 % en poids de palladium et et 10 % en poids d'indium.

Le document DE-585 545 décrit un alliage constitué de 83 % en poids de palladium et 17 % en poids d'argent.

Un alliage constitué de palladium (70 à 98 %), de cuivre (0,5 à 15 %) et de ruthénium (0,5 à 15 %) est également connu par le document US-2,132,116.

Enfin, le document EP 0289097 décrit un alliage constitué de palladium (20 à 50 %) d'indium (20 à 45 %) et d'argent (20 à 50 %), ces alliages pouvant également comprendre jusqu'à 20 % en poids de platine, de rhodium, de ruthénium et/ou d'iridium.

Conformément à l'invention, dans les applications ne nécessitant pas une absence absolue de corrosion, on pourra utiliser le cuivre ou l'argent seul ou en combinaison, comme élément d'addition. Cependant, dans les applications nécessitant une absence absolue de corrosion, on choisira obligatoirement au moins un élément d'addition choisi parmi l'indium et le bismuth et, de façon facultative, au moins un élément choisi parmi le cuivre et l'argent.

Il a pu être découvert que l'excellent comportement des alliages conformes à l'invention est du à la suppression de la corrosion intergranulaire observée sur le palladium et les alliages palladium-platine. On explique ce phénomène de la façon suivante sans vouloir se limiter à cette explication.

Les impuretés très oxydables (Al, Mg, etc.) présentes dans le métal de base subissent en général une ségrégation aux joints de grains. En présence de verre fondu, dont certains oxydes peuvent être réduits par ces impuretés, des réactions d'oxydo-réduction se produisent.

Dès lors, le silicium, en particulier, libéré dans ces réactions, peut diffuser et former de façon très localisée aux joints de grains des phases Pd Si, liquides à ces températures. Ces phases se dissolvent dans le verre fondu et initient alors une réaction en chaîne oxydo-réduction-dissolution des phases Pd Si qui conduit à la corrosion intergranulaire mise en évidence par les observations expèrimentales.

Les additions selon l'invention modifient fondamentalement les réactions qui se produisent en bloquant de façon très efficace les diffusions dans les joints de grains. Dès lors, le mécanisme de corrosion est stoppé ou très fortement ralenti. Il est important de noter que la tenue en corrosion de ces alliages n'est assurée que dans des verres ne contenant pas d'oxydes moins stables que l'oxyde de l'élément métallique d'addition. Dans le cas contraire, ces oxydes seront réduits par l'élement d'addition (In, Bi) et les éléments métalliques ainsi libérés pourront diffuser dans les joints de grains. Ceci se produit en particulier dans les cas des verres de cristallerie contenant de l'oxyde de plomb. La corrosion de ces alliages dans des verres de ce type est extrêmement rapide.

Les caractéristiques mécaniques à l'ambiante des alliages selon l'invention sont plus élevées que celles des alliages platine-rhodium 10 %. Leur ductilité à température ambiante est excellente ce qui permet d'effectuer des transformations nécessaires dans des conditions parfaitement classiques, sans différence notable avec les alliages platine-rhodium 10 %. Les caractéristiques mécaniques à chaud et tout particulièrement la tenue au fluage dépendent des éléments alliés et des éventuelles additions supplémentaires.

Dans la gamme de températures utilisées pour les applications verrières visées par les alliages de la présente invention, la résistance au fluage des alliages binaires est équivalente à celle du platine mais reste plus faible que celle de alliages platine-rhodium 10 %. Cependant, compte tenu des différences importantes de densité et de coût métal, ces alliages présentent un rapport caractéristique en fluage-coût très favorable.

La résistance au fluage, très importante en particulier dans le cas des filières de fibrage, peut être notablement améliorée dans les alliages suivant l'invention au moyen d'additions particulières, ou des procédés classiques d'élaboration.

C'est pourquoi, selon une caractéristique particulière de l'invention, permettant d'améliorer les résistances mécaniques des alliages selon l'invention, et notamment la résistance au fluage, à haute température, l'invention préconise l'addition d'éléments platinoïdes (0 à 50 % en poids de platine ; 0 à 20 % en poids de rhodium; 0 à 20 % en poids d'iridium, 0 à 20 % de ruthénium), ces additions étant réalisées ensemble ou séparément, ou d'étain (0 à 20 %).

Bien entendu, les teneurs de ces éléments sont déterminées en fonction de l'intérêt économique recherché.

D'une façon générale, la teneur en palladium des alliages conformes à l'invention sera comprise entre 45 et 98 %, de préférence entre 80 et 95 % en poids. En d'autres termes, les additions représenteront généralement de 2 à 55 % en poids de l'alliage, et de préférence de 5 à 20 % en poids.

Les alliages selon l'invention peuvent également être renforcés au moyen d'une phase dispersée. Cette technique est bien connue de l'homme de l'art pour être déjà industriellement utilisée pour un certain nombre de matériaux destinés aux hautes températures (superalliage, alliage platine-rhodium). Les procédés d'élaboration de matériaux à phases dispersées déjà connus peuvent s'appliquer aux alliages selon l'invention : durcissement structural, métallurgie des poudres, projection à la flamme.

Par ailleurs, les alliages suivant l'invention sont susceptibles d'être renforcés par oxydation interne du fait de la diffusion aisée de l'oxygène dans les alliages à base de palladium. Cette technique d'élaboration bien connue dans le cas des alliages d'argent pour contact électrique peut s'appliquer avec succès aux alliages suivant l'invention. Il est donc possible d'oxyder de façon interne et de manière homogène, soit l'élément d'addition lui-même (cas de l'indium) soit un élément spécifiquement ajouté à cette fin (tungstène, yttrium, lanthane, etc.).

L'invention sera illustrée plus en détail par les exemples suivants donnés à titre non limitatif de la portée de l'invention. Dans les exemples, tous les pourcentages sont donnés en poids, sauf indications contraires.

### Exemples 1 à 5 -

On prépare par fusion sous vide, les alliages à base de palladium dont les compositions sont données dans le tableau I. Le lingotin est forgé à chaud à une température de 1200°C jusqu'à une épaisseur de 10 mm. Il est ensuite laminé à froid jusqu'à 1 mm.

La résistance au fluage de ces alliages mesurée sur des éprouvettes plates d'épaisseur 1 mm est donné dans le tableau I en comparaison avec le platine et les alliages platine-rhodium 10 %.

La caractérisation des matériaux en présence du verre fondu peut être réalisée à l'aide de trois essais de comportement :
- un test statique de corrosion par le verre fondu à température constante (1200°C) pendant des durées de 100 à 500 heures. Dans ce test une plaquette du matériau est plongée dans le verre liquide, l'ensemble étant en température dans un four. Après le test des observations macrographiques et micrographiques permettent d'apprécier la coloration éventuelle du verre, les phénomènes de corrosion dans le verre fondu et à l'interface métal-verre fondu-air.
- un test de corrosion en présence de verre fondu sur une plaquette chauffée par effet Joule. L'utilisation du chauffage par effet Joule des filières dans l'industrie verrière est très généralisée.
   De ce fait, l'influence éventuelle du courant électrique sur la corrosion par le verre fondu est étudiée par ce type de test. L'essai est réalisé en chauffant une plaquette d'épaisseur 0,5 mm par un courant alternatif sous une densité de courant de 40 mA/cm². Sur la plaquette est déposée une petite quantité de verre qui est fondue par l'échauffement de la plaquette.
   La température est mesurée par un thermocouple qui plonge dans le verre liquide. Le test est effectué à deux températures (1200°C et 1350°C) pendant une durée de 72 h.
   Les conditions générales des tests (densité de courant, température) ont été choisies comme représentatives des conditions d'emploi dans l'industrie verrière. Du fait de pertes thermiques nettement plus importantes dans le test qu'en utilisation industrielle, la densité du courant est d'ailleurs assez nettement plus élevée que celle normalement employée industriellement. De ce fait, la sévérité du test est encore plus importante.
- un test de comportement de type prototype. Cet essai est réalisé sur un creuset de capacité d'environ 500 cm³. Le fond du creuset est formé par une filière permettant de fibrer le verre.

Après essais, les échantillons ne présentaient aucun signe de corrosion. Le palladium testé dans les même conditions a révélé une attaque intergranulaire très marquée.

### Exemples 6 à 9 -

On élabore dans les mêmes conditions que les exemples 1 à 5 les alliages dont les compositions sont indiquées dans le tableau II.

Un traitement d'oxydation de 72 h à 1200°C à l'air est effectué sur les échantillons avant les tests de fluage et les tests de corrosion dans le verre liquide.

Les caractéristiques de fluage en température sont améliorées par ce traitement d'oxydation du fait de la présence d'une phase dispersée d'oxydes. Il s'agit d'oxydes d'indium dans les exemples 6 à 8 et d'oxyde de tungstène dans l'exemple 9. Des résultats semblables sont obtenus avec addition d'yttrium ou de lanthane en remplacement du tungstène.

Par ailleurs, la résistance à la corrosion par le verre liquide est légèrement dégradée par la présence des oxydes présents dans le métal, du fait de réactions entre ces oxydes et le verre liquide. Cependant, les essais de laboratoire effectués (100 à 500 heures d'essais) laissent supposer une résistant à la corrosion par le verre liquide globalement satisfaisante.

**TABLEAU I**

| RESISTANCE AU FLUAGE A HAUTE TEMPERATURE | | | | |
|---|---|---|---|---|
| | Fluage à 1000°C Charge pour un temps de rupture de | | Fluage à 1200°C Charge pour un temps de rupture de | |
| | 1 h (N/mm2) | 10 h (N/mm2) | 1 h (N/mm2) | 10 h (N/mm2) |
| Pt | 17 | 10 | - | - |
| PtRh 10 % | 54 | 38 | 32 | 20 |
| Exemple 1 Pd In 5 % | 25 | 17 | 12 | 8 |
| Exemple 2 Pd In 10 % | 25 | 17 | 10 | 7 |
| Exemple 3 Pd In 15 % | 23 | 16 | 10 | 6 |
| Exemple 4 Pd Bi 5 % | 23 | 15 | 10 | 5,5 |
| Exemple 5 Pd Bi 15 % | 21 | 14 | 10 | 5 |

**TABLEAU II**

| RESISTANCE AU FLUAGE A HAUTE TEMPERATURE | | | | |
|---|---|---|---|---|
| | Fluage à 1000°C Charge pour un temps de rupture de | | Fluage à 1200°C Charge pour un temps de rupture de | |
| | 1 h (N/mm2) | 10 h (N/mm2) | 1 h (N/mm2) | 10 h (N/mm2) |
| Pt | 17 | 10 | - | - |
| PtRh 10 % | 54 | 38 | 32 | 20 |
| Exemple 6 Pd In 5 % | 29 | 20 | 12 | 9 |
| Exemple 7 Pd In 10 % | 31 | 21 | 14 | 9 |
| Exemple 8 Pd In 15 % | 34 | 23 | 12 | 10 |
| Exemple 9 Pd In 5 % W1% | - | - | 13 | 9 |
| Les échantillons des exemples 6 à 9 ont été traités 72 h à 1200°C à l'air. | | | | |

### Exemples 10 à 13

On prépare par fusion sous vide des alliages palladium indium ruthénium dont les compositions sont données dans les tableaux IIIa et IIIb.

Les lingotins sont forgés à chaud à une température de 1200°C jusqu'à une épaisseur de 10 mm ; ils sont ensuite laminés à froid jusqu'à 1 mm.

Les propriétés de fluage à haute température de cette famille d'alliages sont particulièrement remarquables (tableau IIIa).

Il apparaît en effet que dans le cas de l'alliage Pd In 5 Ru 5 la résistance au fluage se rapproche de façon très nette de celle du Pt Rh 10 % (tableau IIIb).

Les tests de corrosion en présence de verre E fondu ont été réalisés à 1200°C pendant des durées allant de 100 h à 500 h.

Les observations micrographiques n'ont révélé aucune corrosion décelable.

Les alliages ternaires palladium indium ruthénium constituent, en raison de leurs très bonnes propriétés de fluage à haute température une famille particulièrement préférée selon l'invention. A l'intérieur de cette famille on préfèrera les alliages dont la teneur en indium et en ruthénium est comprise entre 10 et 15 % en poids et plus particulièrement l'alliage Pd In 5 Ru 5.

**TABLEAU IIIa**

| Composition | Temps de rupture en fluage (h) 1200°C | |
|---|---|---|
| | σ = 0,6 daN/mm² | σ = 1 daN/mm² |
| Pt Rh 10 | 200 | 100 |
| Pd In 10 Ru 0,5 | 40,8 | 6,4 |
| Pd In 10 Ru 1 | 74,2 | 6,2 |
| Pd In 5 Ru 5 | 110 | 45,5 |
| Pd In 5 Ru 10 | 30,6 | 3,2 |

**TABLEAU IIIb**

| Composition | Charge pour un temps de rupture de (en N/mm²) Température 1200°C | | |
|---|---|---|---|
| | 1 h | 10 h | 100 h |
| Pt Rh 10 | 32 | 20 | 10 |
| Pd In 5 Ru 5 | 28 | 17 | 7 |

### Exemples 14 à 26

On prépare par fusion sous vide une série d'alliages à base de palladium dont les compositions sont regroupées dans le tableau IV.

Les lingotins sont forgés à chaud à une température de 1200°C jusqu'à une épaisseur de 10 mm. Ils sont ensuite laminés à froid jusqu'à 1 mm. La résistance au fluage des alliages est mesurée sur des éprouvettes plates d'épaisseur 1 mm. Les caractéristiques de ces différents alliages sont indiquées dans le tableau. Ces valeurs mettent en évidence l'amélioration de résistance au fluage qu'amènent les additions, tout particulièrement de rhodium et d'iridium.

Des tests de corrosion dans le verre E sont effectués à 1200°C pendant 100 h. Après essai, les échantillons sont observés par microscopie et ne présentent aucun signe de corrosion décelable.

Par ailleurs, on a préparé de la même manière qu'aux exemples 14 à 26 les alliages suivants :
- Pd Ag 5
- Pd Ag 10
- Pd Cu 20
- Pd Cu 30
- Pd In 5 Ag 5
- Pd In 2 Ag 10
- Pd In 5 Cu 10
- Pd In 10 Cu 10
- Pd Bi 2 Ag 10
- Pd Bi 10 Cu 10
- Pd In5 Sn5
- Pd In5 Sn 10
- Pd Bi5 Sn10

Les caractéristiques de ces alliages ne sont pas indiquées ici, mais elles mettent en évidence des propriétés intéressantes de résistance à la corrosion par le verre fondu.

**TABLEAU IV**

| COMPOSITION (%) | Temps de rupture en fluage (h) | |
|---|---|---|
| | σ = 0,6 daN/mm² | σ = 1 daN/mm² |
| Pd In 5 | 26,1 | 2,5 |
| Pd In 5 Ir 10 | - | 6,7 |
| Pd In 5 Rh 10 | 98 | 15,4 |
| Pd In 5 Pt 10 | 20,3 | 2 |
| Pd In 5 Rh 5 Pt 5 | 90,7 | 14,8 |
| Pd In 5 Ru 5 Rh 5 Pt 5 | 14,1 | 2,4 |
| Pd Bi 10 | 2,1 | - |
| Pd Bi 5 Ru 1 | 4,4 | 0,8 |
| Pd Bi 5 In 1 | 5,3 | 0,8 |
| Pd Bi 5 Ru 5 | 9,3 | 2,4 |
| Pd Bi 5 Rh 10 | 2,1 | 0,5 |
| Pd Bi 5 Pt 10 | 5,4 | 1,3 |
| Pd Bi 5 Rh 5 Pt 5 | 2,9 | 1,1 |
| Pd Bi 5 Ru 1 Rh 5 Pt 5 | - | 0,7 |

Les alliages conformes à l'invention, qui viennent d'être décrits, permettent de réaliser et de protéger contre la corrosion par le verre fondu les pièces utilisées dans l'industrie verrière. A cet effet, on conçoit aisément que ces pièces soient réalisées, au moins partiellement, notamment au niveau des parties susceptibles d'être en contact avec le verre fondu, qui est de préférence un verre sensiblement exempt d'oxyde moins stable que l'oxyde de l'élément d'addition, comme l'oxyde de plomb, en un alliage tel que défini précédemment.

Il est également à noter que les alliages conformes à l'invention ont la particularité d'être soudables avec eux-mêmes. Par conséquent, les alliages de l'invention permettent la fabrication de pièces soudées.

## Revendications

1. Procédé pour la protection contre la corrosion par le verre fondu de pièces utilisées dans l'industrie verrière, caractérisé en ce qu'il consiste à réaliser au moins partiellement lesdites pièces, notamment au niveau des parties susceptibles d'être en contact avec le verre fondu, en un alliage constitué, en poids, de 45 à 98 % de palladium, de 2 à 55 % en poids d'au moins un élément d'addition choisi parmi l'indium, le bismuth, le cuivre et l'argent, et éventuellement d'au moins un élément choisi parmi le platine, le ruthénium, le rhodium, l'iridium, l'étain, le tungstène, l'yttrium et le lanthane ; le total de ces constituants étant de 100 %.

2. Procédé selon la revendication 1, caractérisé en ce que l'alliage précité comprend de 80 à 95 % en poids de palladium.

3. Procédé selon la revendication 1, caractérisé en ce que l'alliage précité comprend au moins l'un des éléments suivants, en pourcentage en poids :
| | |
|---|---|
| Indium | 2 à 20 % |
| Bismuth | 2 à 20 % |
| Cuivre | 5 à 20 % |
| Argent | 5 à 30 % |

4. Procédé selon la revendication 1, caractérisé en ce que l'alliage précité comprend au moins l'un des éléments suivants en pourcentage en poids :
| | |
|---|---|
| Indium | 5 à 15 % |
| Bismuth | 5 à 15 % |

5. Procédé selon l'une des revendications 1 à 4, caractérisé en ce que l'alliage précité comprend en outre au moins l'un des éléments suivants en pourcentage en poids :
| | |
|---|---|
| Platine | 0 à 50 % |
| Ruthénium | 0 à 20 % |
| Rhodium | 0 à 20 % |
| Iridium | 0 à 20 % |
| Etain | 0 à 20 % |

6. Procédé selon la revendication 5, caractérisé en ce que l'alliage précité est un alliage ternaire palladium-indium-ruthénium.

7. Procédé selon la revendication 6, caractérisé en ce que l'alliage précité est un alliage palladium 90-indium 5-ruthénium 5.

8. Utilisation d'un alliage constitué, en poids, de 45 à 98 % de palladium, de 2 à 55 % en poids d'au moins un élément d'addition choisi parmi l'indium, le bismuth, le cuivre et l'argent, et éventuellement d'au moins un élément choisi parmi le platine, le ruthénium, le rhodium, l'iridium, l'étain, le tungstène, l'yttrium et le lanthane ; le total de ces constituants étant de 100 %, pour la fabrication dans l'industrie verrière de pièces en contact avec le verre fondu.

## Claims

1. Process for the protection against corrosion by molten glass of components used in the glass industry, characterized in that it consists in making at least some parts of said components, in particular those parts which can come into contact with molten glass, from an alloy containing from 45 to 98% by weight of palladium, from 2 to 55% by weight of at least one additional element selected from indium, bismuth, copper and silver, and optionally at least one element selected from platinum, ruthenium, rhodium, iridium, tin, tungsten, yttrium and lanthanum ; the total amount of these constituants being of 100%.

2. Process according to claim 1, characterized in that the above-mentioned alloy comprises from 80 to 95% by weight of palladium.

3. Process according to claim 1, characterized in that the above-mentioned alloy comprises at least one of the following elements (amounts in percentages by weight):
| | |
|---|---|
| Indium | 2 to 20% |
| Bismuth | 2 to 20% |
| Copper | 5 to 20% |
| Silver | 5 to 30% |

4. Process according to claim 1, characterized in that the above-mentioned alloy comprises at least one of the following elements (amounts in percentages by weight):
| | |
|---|---|
| Indium | 5 to 15% |
| Bismuth | 5 to 15% |

5. Process according to one of claims 1 to 4, characterized in that the above-mentioned alloy further comprises one of the following elements (amounts in percentages by weight):
| | |
|---|---|
| Platinum | 0 to 50% |
| Ruthenium | 0 to 20% |
| Rhodium | 0 to 20% |
| Iridium | 0 to 20% |
| Tin | 0 to 20% |

6. Process according to claim 5, characterized in that the above-mentioned alloy is a palladium-indium-ruthenium ternary alloy.

7. Process according to claim 6, characterized in that the above-mentioned alloy is a palladium 90-indium 5-ruthenium 5 alloy.

8. Use of an alloy containing from 45 to 98% by weight of palladium, from 2 to 55% by weight of at least one additional element selected from indium, bismuth, copper and silver, and optionally at least one element selected from platinum, ruthenium, rhodium, iridium, tin, tungsten, yttrium and lanthanum ; the total amount of these constituants being of 100%, for the manufacture in the glass industry of components in contact with molten glass.

## Patentansprüche

1. Verfahren zum Schutz von in der Glasindustrie verwendeten Bauteilen gegen die Korrosion durch das geschmolzene Glas,
dadurch gekennzeichnet,
daß es darin besteht, die Bauteile wenigstens teilweise, besonders auf Höhe der Bereiche, die im Kontakt mit dem geschmolzenen Glas sein können, aus einer Legierung herzustellen, die gewichtsmäßig aus 45 bis 98 % Palladium, 2 bis 55 Gew.% wenigstens eines Zusatzelements, das unter Indium, Wismut, Kupfer und Silber gewählt ist, und gegebenenfalls wenigstens einem unter Platin, Ruthenium, Rhodium, Iridium, Zinn, Wolfram, Yttrium und Lanthan gewählten Element zusammengesetzt ist, wobei die Gesamtheit dieser Bestandteile 100 % ergibt.

2. Verfahren nach dem Anspruch 1,
dadurch gekennzeichnet,
daß die genannte Legierung 80 bis 95 Gew.% Palladium enthält.

3. Verfahren nach dem Anspruch 1,
dadurch gekennzeichnet,
daß die genannte Legierung wenigstens eines der folgenden Elemente in Gewichtsprozent enthält:
| | |
|---|---|
| Indium | 2 bis 20 % |
| Wismut | 2 bis 20 % |
| Kupfer | 5 bis 20 % |
| Silber | 5 bis 30 %. |

4. Verfahren nach dem Anspruch 1,
dadurch gekennzeichnet,
daß die genannte Legierung wenigstens eines der folgenden Elemente in Gewichtsprozent enthält:
| | |
|---|---|
| Indium | 5 bis 15 % |
| Wismut | 5 bis 15 %. |

5. Verfahren nach einem der Ansprüche 1 bis 4,
dadurch gekennzeichnet,
daß die genannte Legierung außerdem wenigstens eines der folgenden Elemente in Gewichtsprozent enthält:
| | |
|---|---|
| Platin | 0 bis 50 % |
| Ruthenium | 0 bis 20 % |
| Rhodium | 0 bis 20 % |
| Iridium | 0 bis 20 % |
| Zinn | 0 bis 20 %. |

6. Verfahren nach dem Anspruch 5,
dadurch gekennzeichnet,
daß die genannte Legierung eine ternäre Palladium-Indium-Ruthenium-Legierung ist.

7. Verfahren nach dem Anspruch 6,
dadurch gekennzeichnet,
daß die genannte Legierung eine Palladium 90 - Indium 5 - Ruthenium 5 - Legierung ist.

8. Verwendung einer Legierung, die gewichtsmäßig aus 45 bis 98 % Palladium, 2 bis 55 Gew.% wenigstens eines unter Indium, Wismut, Kupfer und Silber gewählten Zusatzelements und gegebenenfalls wenigstens einem unter Platin, Ruthenium, Rhodium, Iridium, Zinn, Wolfram, Yttrium und Lanthan gewählten Element zusammengesetzt ist, wobei die Gesamtheit dieser Bestandteile 100 % beträgt, für die Herstellung in der Glasindustrie von Bauteilen im Kontakt mit dem geschmolzenen Glas.
